# EUROPÄISCHE PATENTSCHRIFT

(11) **EP 1 540 662 B1**
(45) Veröffentlichungstag und Bekanntmachung des Hinweises auf die Patenterteilung: **11.04.2007**
(21) Anmeldenummer: 04712010.0
(22) Anmeldetag: 18.02.2004
(51) Int. Cl.: G21C 3/322

(54) **ABSTANDHALTER**
SPACER
DISTANCEUR

(30) Priorität: 06.03.2003 DE 10309742
(43) Veröffentlichungstag der Anmeldung: 15.06.2005
(73) Patentinhaber: AREVA NP GmbH, 91058 Erlangen (DE)
(72) Erfinder: KEMNER, Hans, 91074 Herzogenaurach (DE); BRUCH, Günter, 96114 Hirschaid (DE)
(74) Vertreter: Mörtel & Höfner
(86) Internationale Anmeldenummer: PCT/EP2004/001515
(87) Internationale Veröffentlichungsnummer: WO 2004/079748

(56) Entgegenhaltungen:
- WO-A-02/059903
- US-A- 3 281 327
- US-B1- 6 650 723

## Beschreibung

Die Erfindung bezieht sich auf einen Abstandhalter für ein Brennelement eines mit Leichtwasser gekühlten Kernreaktors, wie er beispielsweise aus der EP 0 237 064 A2 bekannt ist.

Dieser bekannte Abstandhalter ist aus einer Vielzahl von sich kreuzenden Stegen aufgebaut, die ein Gitter mit einer Vielzahl von Maschen bilden. Jeder Steg ist durch zwei miteinander verschweißte dünne Blechstreifen gebildet. Diese Blechstreifen sind jeweils mit erhabenen Ausformungen versehen, die sich ins Innere der vom Blechstreifen jeweils begrenzten Gittermasche erstrecken. Jeweils einander gegenüberliegende, benachbarte Ausformungen der zu einem Steg zusammengefügten Blechstreifen bilden einen sich in vertikaler Richtung erstreckenden, annähernd rohrförmigen Strömungsunterkanal. Diese Strömungsunterkanäle sind relativ zur Vertikalen geneigt und erzeugen eine parallel zum Steg orientierte, auf einen Kreuzungspunkt der Stege gerichtete Strömungskomponente der Kühlflüssigkeit. Diese erzeugt eine Drallströmung um die die Maschen jeweils durchsetzenden Brennstäbe.

Bei dem bekannten Abstandhalter dienen diese Ausformungen außerdem zugleich als Lagerung für die die Maschen durchsetzenden Brennstäbe. Diese Brennstablagerung hat sich in der Praxis als besonders vorteilhaft herausgestellt, da bei der Verwendung solcher Abstandhalter nur geringe Frettingschäden an den Brennstabhüllrohren beobachtet werden.

Der Erfindung liegt nun die Aufgabe zu Grunde, einen Abstandhalter der eingangs genannten Art anzugeben, der bei hoher Frettingsicherheit zugleich verbesserte thermohydraulische Eigenschaften aufweist.

Die genannte Aufgabe wird gemäß der Erfindung gelöst mit einem Abstandhalter mit den Merkmalen des Patentanspruches 1. Ein solcher Abstandhalter für ein Brennelement eines mit Leichtwasser gekühlten Kernreaktors ist aus einer Vielzahl von sich kreuzenden und ein Gitter bildenden Stegen aufgebaut, die jeweils aus miteinander verbundenen ersten und zweiten Blechstreifen bestehen. Diese Blechstreifen weisen Ausformungen derart auf, dass jeweils benachbarte Ausformungen einen Strömungsunterkanal bilden und derart gestaltet sind, dass sie dem aus dem Strömungsunterkanal austretenden Kühlwasser eine Strömungskomponente senkrecht zu einer zwischen den Blechstreifen verlaufenden vertikalen Mittenebene aufprägen. Dadurch wird eine verbesserte Querdurchmischung des Kühlwassers ermöglicht.

Insbesondere nimmt der Querschnitt des durch eine erste Ausformung gebildeten Teilkanals in Strömungsrichtung des Kühlwassers ab und der Querschnitt des durch eine zweite, benachbarte Ausformung gebildeten Teilkanals nimmt in dieser Richtung zu. Mit anderen Worten: der Querschnitt des durch die erste Auformung gebildeten Teilkanals ist an der Eintrittsöffnung größer als an der Austrittsöffnung und der Querschnitt des durch die zweite Ausformung gebildeten Teilkanals ist an der Eintrittsöffnung kleiner als an der Austrittsöffnung. Diese Zunahme bzw. Abnahme des Querschnitts kann kontinuierlich über die gesamte Steghöhe erfolgen. Es sind jedoch auch Ausführungsformen möglich, bei denen ein Mittenbereich mit konstantem Querschnitt vorliegt. Durch diese voneinander verschiedene Gestalt der jeweils benachbarten Ausformungen lässt sich eine senkrecht zur Stegebene gerichtete Strömungskomponente durch fertigungstechnisch besonders einfache Formgebung der Blechstreifen erzeugen.

In einer weiteren vorteilhaften Ausgestaltung der Erfindung weisen der erste und der zweite Blechstreifen jeweils erste und zweite Ausformungen auf, die abwechselnd in Längsrichtung des ersten und zweiten Blechstreifens angeordnet sind. Erster und zweiter Blechstreifen sind derart zu dem Steg zusammengefügt, dass jeder Strömungsunterkanal durch eine erste und zweite Ausformung gebildet ist. Ein solcher Blechstreifen und der damit gebildete Abstandhalter lassen sich einfach fertigen.

In einer bevorzugten Ausgestaltung der Erfindung verläuft der Strömungsunterkanal zumindest an seinem stromabwärtigen Ende schräg oder geneigt zur Vertikalen.

In einer weiteren bevorzugten Ausführungsform weist das aus den einander benachbarten und zu einem Kreuzungspunkt zweier Stege geneigten Strömungsunterkanäle eines Stegs jeweils austretende Kühlwasser einander entgegengesetzte Strömungskomponenten senkrecht zur Mittenebene auf, so dass eine Drallströmung um den Kreuzungspunkt erzeugt wird, wobei insbesondere die Drallströmungen um einander benachbarte Kreuzungspunkte entlang eines Steges jeweils entgegengesetzt gerichtet sind. Dadurch wird das Entstehen eines durch die Drallströmungen erzeugten und auf das gesamte Brennelement wirkenden Gesamtdrehmomentes verhindert.

Zur weiteren Erläuterung der Erfindung wird auf das Ausführungsbeispiel der Zeichnung verwiesen. Es zeigen:
Fig. 1 eine Draufsicht auf einen Ausschnitt aus einem Abstandhalter gemäß der Erfindung in einer schematischen Prinzipdarstellung,
Fig. 2 einen vergrößerten Ausschnitt des Abstandhalters im Bereich eines Kreuzungspunktes zweier Stege ebenfalls in einer Draufsicht,
Fig. 3 einen Ausschnitt aus einem Steg im Bereich einer Ausformung in einer perspektivischen Darstellung,
Fig. 4 einen Ausschnitt aus dem Steg in einer Seitenansicht.
Fig. 5 eine weitere Ausgestaltung eines erfindungsgemäßen Strömungsunterkanals in einer schematischen perspektivischen Darstellung. -

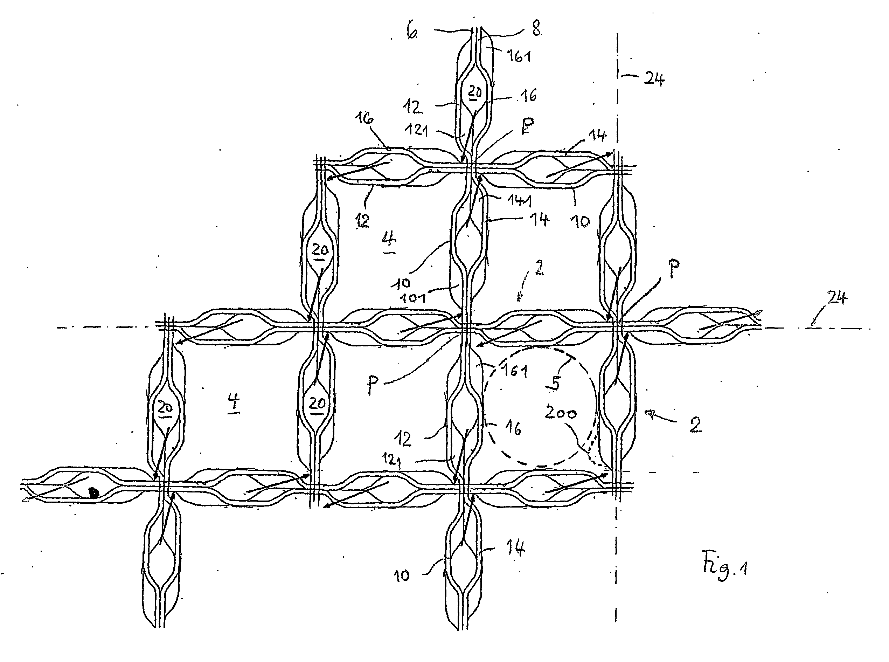

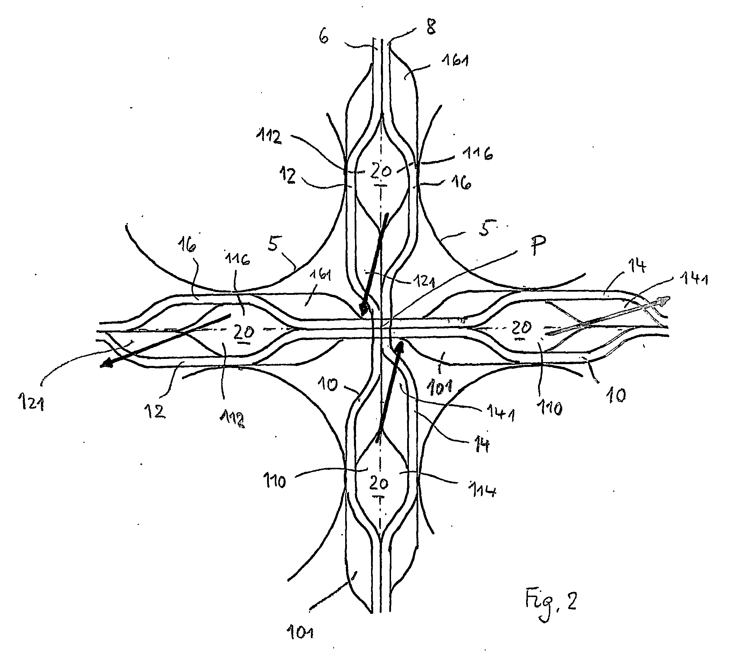

Gemäß Fig. 1 und 2 ist der Abstandhalter aus einer Vielzahl von sich kreuzenden Stegen 2 aufgebaut, die ein Gitter mit polygonalen, im Ausführungsbeispiel quadratischen Maschen 4 bilden, durch die Brennstäbe 5 hindurchgeführt sind. Jeder Steg 2 ist aus einem ersten und zweiten Blechstreifen 6 bzw. 8 zusammengesetzt, die an ihren sich berührenden oberen und unteren Längskanten miteinander verschweißt sind.

Erster und zweiter Blechstreifen 6 bzw. 8 sind jeweils mit Ausformungen 10, 12 bzw. 14, 16 versehen, die sich jeweils in das Innere der vom Blechstreifen 6 bzw. 8 jeweils begrenzten Masche 4 erstrecken. Diese Ausformungen 10, 12, 14, 16 dienen zugleich als Lager für die die Maschen 4 durchsetzenden Brennstäbe 5. Zwischen den Ausformungen 10, 14 und 12, 16 der jeweils einen Steg 2 bildenden ersten und zweiten Blechstreifen 6, 8 ist auf diese Weise ein Strömungsunterkanal 20 gebildet, in dem das Kühlwasser durch den Abstandhalter in vertikaler Richtung nach oben (aus der Zeichenebene heraus) strömt.

In den Figuren 1 und 2 ist zu erkennen, dass die Strömungsunterkanäle 20 auf ihrer gesamten Länge in der Stegebene geneigt zur Vertikalen, d. h. geneigt zu einer Richtung, die senkrecht auf der Zeichenebene steht, verlaufen. Diese Neigung bewirkt eine Ablenkung der Strömung geneigt zur Vertikalen, jedoch immer nach wie vor parallel zur Stegebene. Jeweils benachbarte Strömungsunterkanäle 20 eines Stegs 2 haben eine entgegengesetzte Neigung. Die vier einem Kreuzungspunkt P benachbarten Strömungsunterkanäle 20 sind dabei so orientiert, dass zwei in einem gemeinsamen Steg 2 angeordnete Strömungsunterkanäle 20 einander zugeneigt, während die zwei zum anderen Steg 2 gehörenden Strömungsunterkanäle 20 voneinander weggeneigt sind.

Jeder Strömungsunterkanal 20 weist eine Form auf, die asymmetrisch zu einer zwischen den Blechstreifen 6, 8 befindlichen und senkrecht zur Zeichenebene orientierten Mittenebene 24 ist. Die Ausformungen 10, 16 sind hierzu jeweils mit einer unteren Auswölbung 101 bzw. 161 versehen, so dass die Ausformung 10 bzw. 16 an dieser Stelle näher am Kreuzungspunkt P liegt. Die den Ausformungen 10 bzw. 12 jeweils zugeordneten Ausformungen 14 bzw. 16 weisen dementsprechend in ihrem oberen Bereich obere Auswölbungen 121 bzw. 141 auf, so dass die Querschnittsfläche des Strömungsunterkanals 20 über die gesamte Höhe des Steges 2 annähernd gleich bleibt.

Der von den Ausformungen 10, 16 jeweils gebildete Teilkanal 110 bzw. 116 hat aufgrund der Auswölbungen 101 bzw. 161 am Eingang des Strömungsunterkanals 20 eine größere Querschnittsfläche als der von den Ausformungen 12, 14 jeweils gebildete Teilkanal 112 bzw. 114. Die Teilkanäle 110, 116 zweigen deshalb eine größere Menge an Kühlwasser aus dem durch die Masche 4 gebildeten Hauptkanal ab als die Teilkanäle 112, 114. Da sich die Querschnitte der Teilkanäle 110, 116 in Strömungsrichtung verengen und die Querschnitte der Teilkanäle 112, 114 erweitern, wird das im Strömungsunterkanal 20 strömende Kühlwasser zu den Teilkanälen 112 bzw. 114 verlagert und erhält auf diese Weise eine zur Steg- oder Mittenebene 24 senkrechte Strömungskomponente.

Mit anderen Worten: Durch die asymmetrische Formgebung der Ausformungen 10, 14 bzw. 12, 16, d. h. durch die versetzte Anordnung der Auswölbungen 101, 121, 141, 161 wird dem zwischen diesen Ausformungen 10, 14 bzw. 12, 16 strömenden Kühlwasser zusätzlich eine zur Mittenebene 24 des Stegs 2 senkrechte Geschwindigkeitskomponente verliehen, da das Kühlwasser eine Ablenkung zur Auswölbung 121 bzw. 141 erfährt.

Alternativ zu der in den Figuren 1 bis 3 dargestellten Gestaltung der Ausformungen, bei der die Auswölbungen nur eine Vergrößerung der Ausformung in Richtung der Mittenebene 24 (Stegebene) bilden, ist es auch möglich, Auswölbungen vorzusehen, die sich tiefer ins Innere der Masche 4 erstrecken, wie dies anhand einer Auswölbung 200 gestrichelt in der Figur 1 in der rechten unteren Masche angedeutet ist, und den in den Ecken vorhandenen und vom Brennstab 5 freigelassenen Raum besser ausnutzen.

Die Auswölbungen 121 und 141 bewirken nun, dass das aus den Strömungsunterkanälen 20 ausströmende Kühlwasser aufgrund der zur Längsrichtung 24 senkrechten Geschwindigkeitskomponente nicht direkt auf den Kreuzungspunkt P gerichtet sondern schräg an ihm vorbeigerichtet ist. Dies erzeugt eine Drallströmung um den Kreuzungspunkt P, die zu einem verbesserten Wärmeübergang zwischen Brennstab und Fluid führt. Darüber hinaus sind die Ausformungen 10, 12, 14, 16 derart angeordnet, dass die Richtung der Drallströmung jeweils benachbarter Kreuzungspunkte 22 entgegengesetzt ist. Auf diese Weise ist verhindert, dass sich die von den Drallströmungen jeweils ausgeübten Drehmomente zu einem auf das Brennelement wirkenden Gesamtdrehmoment addieren.

Im Ausführungsbeispiel haben die Ausformungen 10, 12, 14, 16 grundsätzlich die gleiche Form. Erster und zweiter Blechstreifen 6 bzw. 8 sind jedoch um eine Achse senkrecht zur Blechstreifenebene oder Mittenebene 24 verdreht zueinander angeordnet.

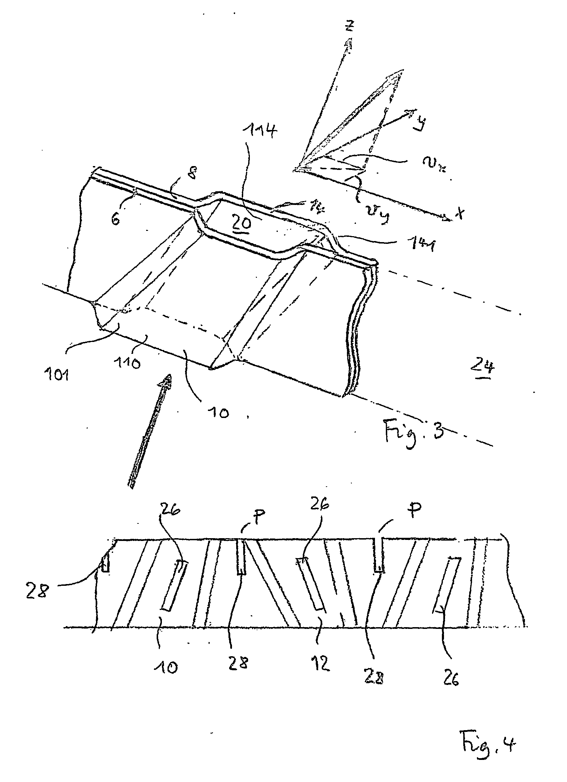

Die Form der Strömungsunterkanäle 20 geht insbesondere aus dem Prinzipbild der Figur 3 deutlich hervor. In dieser Figur ist deutlich zu erkennen, dass der größere Teil des von unten anströmenden und aus den Hauptkanälen vom Strömungsunterkanal 20 abgezweigten Kühlwassers von dem Teilkanal 110 aufgenommen wird, der von der Ausformung 10 gebildet wird, die eine untere Auswölbung 101 aufweist. Das durch den auf seiner gesamten Länge schräg verlaufenden Strömungsunterkanal 20 in der Mittenebene schräg zur Vertikale (z-Richtung) nach oben strömende Kühlwasser wird aufgrund der Querschnittsverengung des Teilkanals 110 in den Teilkanal 114 der benachbarten Ausformung 14 gelenkt und erhält so neben einer zum Kreuzungspunkt hin gerichteten Geschwindigkeitskomponente vₓ parallel zur Stegebene 24 eine Geschwindigkeitskomponente vy senkrecht dazu.

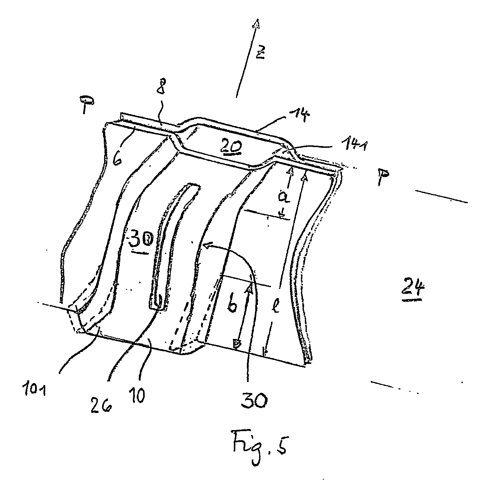

Zur Verbesserung der Mischung der Kühlflüssigkeit zwischen den einzelnen Hauptkanälen, d. h. zur Erhöhung des Quermassenstroms können, wie es in Figur 4 gezeigt ist, die Ausformungen 10, 14 jeweils mit Längsschlitzen 26 versehen sein.

Eine weitere Erhöhung des Quermassenstromes kann auch dadurch erzielt werden, dass in den Kreuzungspunkten P Fenster 28 vorgesehen sind. Ebenso können wie beim bekannten HTP-Abstandhalter die Ausformungen 10, 12, 14, 16 in der Mitte des Steges 2 noch beidseitig des Schlitzes 26 längsgestreckte Auswölbungen aufweisen, die in das Innere der Masche 4 gerichtet sind und durch ihre Formgebung eine Linienlagerung für den Brennstab bilden, so dass dieser in der Masche insgesamt an acht Linien federnd gehaltert ist.

Dies ist im Ausführungsbeispiel gemäß Fig. 5 angedeutet. In dieser Figur sind beidseitig des Schlitzes 26 Auswölbungen 30 dargestellt. Darüberhinaus ist der von den Ausformungen 14 und 10 gebildete Strömungsunterkanal 20 abweichend von dem in Fig. 3 dargestellten Ausführungsbeispiel nicht auf seiner gesamten Länge 1 (= Steghöhe) geneigt zur Vertikalen z, sondern nur auf einem Teil a seiner Länge 1 an seinem stromabwärtigem Ende und ggf. auf einem Teil b seiner Länge 1 stromaufwärts. Im übrigen Teil 1-a bzw. 1-a-b verläuft der Strömungsunterkanal 20 im wesentlichen parallel zur Vertikalen z. Auf diese Weise kann bei kleinen Maschenweiten und großen Steghöhen (Länge 1 des Strömungsunterkanals 20) eine relativ große Geschwindigkeitskomponente vₓ parallel zur Stegebene 24, d.h. eine von einem Kreuzungspunkt P weg - bzw. zu einem Kreuzungspunkt P hin gerichtete Geschwindigkeitskomponente erzeugt werden.

## Patentansprüche

1. Abstandhalter für ein Brennelement eines mit Leichtwasser gekühlten Kernreaktors, der aus einer Vielzahl von sich kreuzenden und ein Gitter bildenden Stegen (2) aufgebaut ist, die jeweils aus miteinander verbundenen ersten und zweiten Blechstreifen (6,8) bestehen, die Ausformungen (10,12,14,16) derart aufweisen, dass jeweils benachbarte Ausformungen (10, 14 bzw. 12,16) einen Strömungsunterkanal (20) bilden, der schräg zur Vertikalen (z) verläuft, **dadurch gekennzeichnet, daß** jeder Strömungsunterkanal (20) eine Form aufweist, die asymmetrisch zu einer zwischen den Blechstreifen (6,8) verlaufenden vertikalen Mittenebene (24) ist um dem aus jedem Strömungsunterkanal austretenden Kühlwasser eine Strömungskomponente (v_{y}) senkrecht zur Mittenebene aufzuprägen.

2. Abstandhalter nach Anspruch 1, bei dem der Querschnitt des durch eine erste Ausformung (10,16) gebildeten Teilkanals (110 bzw. 116) in Strömungsrichtung des Kühlwassers abnimmt und der Querschnitt des durch eine zweite, benachbarte Ausformung (14 bzw. 12) gebildeten Teilkanals (114,112) in dieser Richtung zunimmt.

3. Abstandhalter nach Anspruch 1 oder 2, bei dem der erste und der zweite Blechstreifen (6,8) jeweils erste und zweite Ausformungen (10,12 bzw. 14,16) aufweisen, die abwechselnd in Längsrichtung (x) des ersten und zweiten Blechstreifens (6,8) angeordnet sind, und bei dem erster und zweiter Blechstreifen (6,8) derart zu dem Steg (2) zusammengefügt sind, dass jeder Strömungsunterkanal (20) durch eine erste und zweite Ausformung (10,14 bzw. 12,16) gebildet ist.

4. Abstandhalter nach Anspruch 1, 2 oder 3, bei den der Strömungsunterkanal (20) zumindest an seinem stromabseitigen Ende schräg zur Vertikalen (z) verläuft.

5. Abstandhalter nach Anspruch 4, bei dem einander benachbarte Strömungsunterkanäle (20) eines Stegs (2) zu einem Kreuzungspunkt (P) zweier Stege (2) derart geneigt sind, dass das aus ihnen austretende Kühlwasser einander entgegengesetzte Strömungskomponenten (vₓ) senkrecht zur Mittenebene (24) aufweist, so dass eine Drallströmung um den Kreuzungspunkt (P) erzeugt wird.

6. Abstandhalter nach Anspruch 5, bei dem die Drallströmungen um einander benachbarte Kreuzungspunkte (P) entlang eines Steges (2) jeweils entgegengesetzt gerichtet sind.

7. Brennelement mit wenigstens einem Abstandhalter nach einem der vorhergehenden Ansprüche.

## Claims

1. Spacer for a fuel element of a nuclear reactor cooled by light water, which is constructed from a multiplicity of crisscrossing webs (2) that form a grid and respectively consist of interconnected first and second sheet-metal strips (6, 8) that have corrugations (10, 12, 14, 16) in such a way that in each case neighbouring corrugations (10, 14 and 12, 16, respectively) form a flow subchannel (20) that runs oblique to the vertical (z), **characterized in that** each flow subchannel (20) has a shape, which is asymmetric to a vertical middle plane (24) running between the sheet-metal strips (6, 8) in order to impart to the cooling water emerging from each flow subchannel a flow component (v_{y}) perpendicular to the middle plane.

2. Spacer according to Claim 1, in which the cross section of the partial channel (110 or 116) formed by a first corrugation (10, 16) decreases in the flow direction of the cooling water, and the cross section of the partial channel (114, 112) formed by a second, neighbouring corrugation (14 or 12) increases in this direction.

3. Spacer according to Claim 1 or 2, in which the first and the second sheet-metal strips (6, 8) in each case have first and second corrugations (10, 12 and 14, 16, respectively) that are alternately arranged in the longitudinal direction (x) of the first and second sheet-metal strips (6, 8), and in which the first and second sheet-metal strips (6, 8) are assembled to form the web (2) in such a way that each flow subchannel (20) is formed by a first and second corrugation (10, 14 and 12, 16, respectively).

4. Spacer according to Claim 1, 2 or 3, in which the flow subchannel (20) runs oblique to the vertical (z) at least at its downstream end.

5. Spacer according to Claim 4, in which mutually neighbouring flow subchannels (20) of a web (2) are inclined to a crossing point (P) of two webs (2) in such a way that the cooling water emerging from them has mutually opposed flow components (vₓ) perpendicular to the middle plane (24) such that a swirl flow is produced around the crossing point (P).

6. Spacer according to Claim 5, in which the swirl flows around mutually neighbouring crossing points (P) are respectively directed in an opposed fashion along a web (2).

7. Fuel element having at least one spacer according to one of the preceding claims.

## Revendications

1. Entretoise pour un assemblage combustible d'un réacteur nucléaire à refroidissement par de l'eau légère, qui est formé d'une pluralité de barrettes s'entrecroisant et formant un réseau, qui sont constituées chacune de première et deuxième bandes (6, 8) de tôle assemblées les unes aux autres et ayant des excroissances (10, 12, 14, 16) telles que respectivement des excroissances (10, 14 ou 12, 16) voisines forment un canal (20) inférieur d'écoulement, qui s'étend de façon incliné par rapport à la verticale (z), **caractérisée en ce que** chaque canal (20) inférieur d'écoulement a une forme qui est dissymétrique par rapport à un plan (24) médian vertical s'étendant entre les bandes (6, 8) de tôle pour imprimer à l'eau de refroidissement sortant de chaque canal inférieur d'écoulement une composante (v_{y}) d'écoulement perpendiculaire au plan médian.

2. Entretoise suivant la revendication 1, dans laquelle la section transversale du sous canal (110 ou 116) partiel formé par une première excroissance (10, 16) diminue dans la direction du courant de l'eau de refroidissement et la section transversale du canal (114, 112) partiel formé par une deuxième excroissance (14 ou 12) voisine augmente dans cette direction.

3. Entretoise suivant la revendication 1 ou 2, dans laquelle la première et la deuxième bande (6, 8) de tôle ont respectivement des première et des deuxième excroissances (10, 12 ou 14, 16) qui sont disposées en alternance dans la direction (x) longitudinale de la première et la deuxième bande (6, 8) de tôle et dans la dans la calle des premières et deuxièmes bandes (6, 8) de tôle sont rassemblées en la barrette (2) de façon que chaque canal (20) inférieur d'écoulement soit formé par une première et deuxième excroissance (10, 14 ou 12, 16).

4. Entretoise suivant la revendication 1, 2 ou 3, dans laquelle le canal (20) inférieur d'écoulement s'étend au moins à son extrémité en aval en étant incliné par rapport à la verticale (z).

5. Entretoise suivant la revendication 4, dans laquelle des canaux (20) inférieurs d'écoulement d'une barrette (2) voisins l'un de l'autre sont inclinés par rapport à un point (P) d'intersection de deux barrettes (2) de façon à ce que l'eau de refroidissement en sortant ait des composantes (Vx) d'écoulement perpendiculairement au plan (24) médian mutuellement opposées, de manière à produire un courant en tourbillon autour du point (P) d'intersection

6. Entretoise suivant la revendication 5, dans laquelle les courants en tourbillon autour de points (P) d'intersection voisins l'un de l'autre sont dirigés le long d'une barrette (2) respectivement en sens opposé.

7. Assemblage combustible ayant au moins une entretoise suivant lune des revendications précédentes.
